# EUROPEAN PATENT SPECIFICATION

(11) **EP 1 267 584 B1**
(45) Date of publication and mention of the grant of the patent: **17.09.2008**
(21) Application number: 01810584.1
(22) Date of filing: 15.06.2001
(51) Int. Cl.: H04Q 7/34, H04L 12/24, H04L 12/26

(54) **Quality of service assessment by comparing the actual quality of service with the quality of service being agreed upon between the user and the network**
Bewertung der Dienstgüte durch Vergleich der aktuellen Dienstgüte mit der zwischen dem Benutzer und dem Netz vereinbarten Dienstgüte
Evaluation de la qualité de service par comparaison entre la qualité de service actuelle et la qualité de service convenue entre l'utilisateur et le réseau de télécommunication

(43) Date of publication of application: 18.12.2002
(73) Proprietor: Ascom (Schweiz) AG, 3000 Bern 14 (CH)
(72) Inventor: Wu, Raymond, CH-3145 Oberscherli (CH)
(74) Representative: Roshardt, Werner Alfred

(56) References cited:
- EP-A- 0 946 008
- EP-A- 1 079 647
- WO-A-00/33511
- WO-A-00/67505
- JOURNAL ARTICLE: 'H.323: VISUAL TELEPHONE SYSTEMS AND EQUIPMENT FOR LOCAL AREA NETWORKS WHICH PROVIDE A NON-GUARANTEED QUALITY OF SERVICE' ITU-T RECOMMENDATION H.323 November 1996, pages 1 - 79, XP002214364

## Description

### Technical Field

The invention relates to a process and a device for an assessment of a service quality of a communication network where an actual service quality that is actually available to a user, is determined.

### Background art

In some communication networks, i. e. GPRS (general packet radio service) or third generation mobile systems such as UMTS (Universal Mobile Telecommunications System) or WCDMA (Wideband Code Division Multiple Acces) the user can choose from different grades of quality of service (QOS). Once the user and the system have agreed on a particular QOS the network will provide this level of service quality to the subscriber.

WO 00/67505 A1 describes a communication system that makes different levels of services (e. g. different resources or a different amount of a certain resource) available to a user (p. 8, I. 1-14). A user first requests a specific quality level for establishing a communication connection (p. 4, 1. 16-30). Then the system, after checking parameters regarding the requested resource(s), allocates an available quality level to the user according to the corresponding parameters. Finally, the systems compares the requested level of resources with the level of recources allocated to the user by the system itself.

WO/00 33511 A1 discloses a system for enhancing the end-user service quality which is defined as an objective measure for the quality of a speech signal with a good correlation to the subjective speech quality as perceived by a human end-user (p. 2, **I.** 14-18). The end-user service quality is monitored by measuring different device and/or channel parameters throughout the communication network (p. 7, I.10 ff). On the basis of these parameters, network problems affecting the end-user service quality can be located and eliminated.

Document ITU-T Recommendation H.323 describes terminals, equipment and services for multimedia communication over local area networks (LAN) which do not provide a guaranteed quality of service (p. 4, first paragraph). By means of an ARQ (admissions request) message a user specifies a requested bandwith for a call. With an ACF (admissions confirm) message the gatekeeper may reduce the requested bandwith and then the user sets up the call (chapters 7.2.4 and 8.1.2).

In known communication systems there is no process or equipment available which enables to determine if the network fulfills its obligations that means if the network actually provides what it has promised.

### Summary of the Invention

It is therefore an object of the present invention to provide a process and a device to decide whether the network fulfills its obligation or not.

This object can be achieved with the process defined by Claim 1. According to the invention the process for an assessment of a service quality of a communication network for data transmission involves the determination of the actual service quality of the communication network. This actual service quality then is compared with the target service quality being agreed upon between the user and the network.

By measuring the actual service quality and comparing it to the target service quality it can be decided if the network fulfills its obligations or how often and to what extent it fails to fulfill them. This knowledge can be used for example as a basis for subscriber billing where the subscriber can be billed the full amount or he can be given discounts it the network did not fulfill its obligations. It can also be used as a basis for subscriber complaints when the user realizes that he did not get the agreed service quality or it can be used for network improvements. The network provider can for example track the network performance over time and the performance before and after improvements can be compared.

According to the invention the device for an assessment of a service quality of a communication network comprises means for measuring an actual service quality that is actually available to a user. The communication network and the user agree upon a target service quality that is defined under a set of conditions. Furthermore it comprises means for calculating an assessment result by comparing the actual service quality to the agreed target service quality.

From the following detailed description and from all the claims as a whole it will be clear to a person skilled in the art, that there exist more advantageous embodiments and combinations of characteristics of the invention.

### Ways of carrying out the invention

The drawing used for illustration of the examples shows:

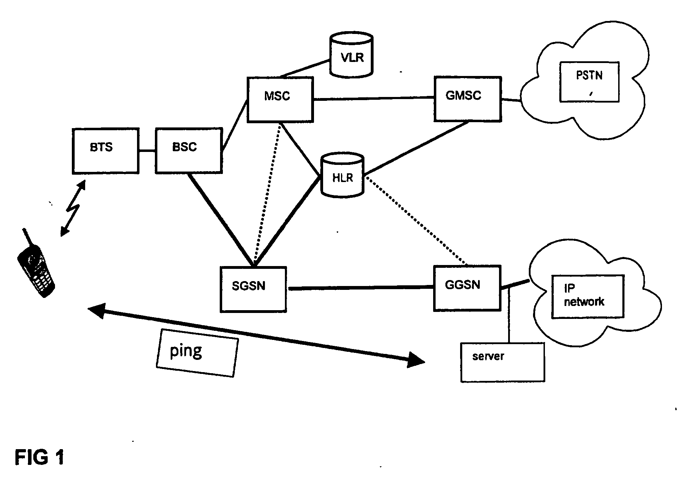

- Fig. 1: A schematic diagram of a GPRS network.

In cellular networks like GSM, there are no different grades of quality of service the subscriber can choose from. All subscribers essentially get the same service.

In GPRS and third generation networks like UMTS / WCDMA, there are provisions for the subscriber to specify what type of service he wishes to use. This is done at two levels:
a. the subscription of each subscriber can specify what (maximum) quality of service he is allowed to have,
b. when the subscriber actually uses the service, the network will negotiate (via signalling messages) what quality of service can be offered at that particular instant in time.

Once the negotiation between the network and the subscriber mobile phone or any other communication device such as a mobile phone with test equipment features is completed, there is then an agreement between the two parties that the network will provide this agreed level of quality of service to the subscriber.

It is therefore important that this type of agreement should be tested and/or verified to see if the network actually provides what it has promised.

While there are systems which measures the performance of the network in terms of some quality of service parameters, there are no known systems which carry out these measurements under the same exact conditions in which the quality of service parameters are specified or which compare the measured parameters to the agreed quality of service to deliver a verdict on whether the network has fulfilled its obligations.

This measurement and comparison is non-trivial in that several quality of service parameters could be interdependent, and should be measured only under controlled environment.

An example of these quality of service parameters is "round trip delay" (commonly known as ping delay).

Figure 1 shows a GPRS network which illustrates the way of such a ping. The abbreviations mean: BTS - base station, BSC - base station controller, MSC - mobile service switching center, HLR - home location register, VLR - visitor location register, GMSC - gateway mobile service switching center, SGSN - serving GPRS support node, GGSN - gateway GPRS support node, WCDMA - Wideband code division multiple access, Ping - data packet sent from A to B and immediately returned by B to A, IP network - Internet protocol network (e.g. public internet), PSTN/ISDN - telephony network and Server — a computer where information is stored whereby the information can be accessed by authorized persons/computers.

A packet of data is sent from the mobile phone, via BTS/BSC/SGSN/GGSN to the server, and the server immediately sends the same packet back to the mobile phone. The time taken for this round trip i.e. from the time of packet sent by the mobile phone to it arriving back to the mobile phone again, is the round trip delay.

The magnitude of this delay is dependent, for example, on the size of the packet sent. If the packet size is large, then the network will sub-divide the packet into smaller blocks during transmission. This sub-division will take time and hence affect the round trip delay.

Another factor affecting the round trip delay would be "precedence". This is, in itself, a quality of service parameter which forms part of the agreed conditions between the subscriber/mobile phone and the network. Data packets with "low" precedence can be, in adverse traffic conditions, held up by the network in queues or discarded altogether.

The measurement of this round trip delay should therefore be done in the same exact conditions in which it is specified e.g. use only 128 byte long "high precedence" packets for round trip delay measurements.

In turn, the round trip delay will affect the data throughput when the subscriber transmits data. One reason for that is that if there are errors in the received data, the receiver will notify the sender to re-send. These messages which go between the sender and the receiver (e.g. the mobile phone and the server) are all subject to the round trip delay. In general, the higher the round trip delay, the lower will be the user data throughput. However, this relationship is complex and is not always linear.

There are several quality of service parameters which can be used as a basis for the agreement between subscriber and network. They may include round trip delay, precedence, reliability, data throughput rate, speech quality and so on.

The invention therefore provides a system to deliver results to show if the quality of service conditions agreed between the subscriber communication device and the network have actually been met by the network when the subscriber uses the network's services. The system carries out measurements of these quality of service conditions, in the exact manner in which these conditions are specified. Preferably the system calculates results showing if the network has fulfilled its obligations and delivers them to the operator.

The system calculates these results by, for example, capturing from the subscriber mobile phone or any other communication device (which forms part of the system and is connected to the control element of the system) the results of the quality of service negotiations i. e. the agreement between the subscriber and the network. This can be done either in real time or by checking the subscription of the concerned user. Then the system carries out the measurements to determine the actual service quality and finally shows, if the network has fulfilled its obligations during the whole period when the subscriber uses the network's services.

If the system finds, that the network fails to fulfill its obligations, the system furthermore can show how often the network fails and what percentage of obligation has actully been fulfilled.

## Claims

1. Process for an assessment of a service quality of a communication network where an actual service quality that is actually available to a user, is determined, **characterised in that** the communication network and the user agree upon a target service quality and an assessment result is calculated by comparing the actual service quality to the target service quality.

2. Process according to claim 1, **characterized in that** the service quality of a communication network for data transmission is assessed.

3. Process according to claim 1 or 2, **characterized in that** the target service quality is defined under a set of conditions and the actual service quality is determined under said conditions.

4. Process according to any one of claims 1 to 3, **characterized in that** the target service quality is chosen from a set of different target service qualities.

5. Process according to any one of claims 1 to 4, **characterized in that** at least one parameter that is used to characterize a quality of service of the communication network is measured for determining the actual service quality.

6. Process according to claim 5, **characterized in that** at least one of the parameters "round trip delay", "precedence", "reliability", "data throughput rate" or "speech quality" is measured.

7. Process according to any one of claims 1 to 6, **characterized in that** the service quality of a cellular mobile radio network, particularly a general packet radio service (GPRS) network is assessed.

8. Process according to any one of claims 1 to 7, **characterized in that** it is determined whether the network reaches the target service quality or not while the user utilizes the service and if it fails to reach the target service quality how often it fails and what percentage of the target service quality it reaches.

9. Device for an assessment of a service quality of a communication network, the device comprising means for measuring an actual service quality that is actually available to a user, **characterized in that** the communication network is a communication network where the communication network and the user agree upon a target service quality that is defined under a set of conditions and where the device comprises means for calculating an assessment result by comparing the actual service quality to the target service quality.

## Patentansprüche

1. Verfahren zur Bewertung einer Dienstgüte eines Kommunikationsnetzwerkes, bei dem eine tatsächliche Dienstgüte, die einem Nutzer tatsächlich zur Verfügung steht, bestimmt wird, **dadurch gekennzeichnet, dass** das Kommunikationsnetzwerk und der Nutzer eine Zieldienstgüte vereinbaren und ein Bewertungsergebnis berechnet wird, indem die tatsächliche Dienstgüte mit der Zieldienstgüte verglichen wird.

2. Verfahren nach Anspruch 1, **dadurch gekennzeichnet, dass** die Dienstgüte eines Kommunikationsnetzwerkes zur Datenübertragung bewertet wird.

3. Verfahren nach Anspruch 1 oder 2, **dadurch gekennzeichnet, dass** die Zieldienstgüte durch einen Satz von Konditionen definiert ist und die tatsächliche Dienstgüte anhand dieser Konditionen bestimmt wird.

4. Verfahren nach einem der Ansprüche 1 bis 3, **dadurch gekennzeichnet, dass** die Zieldienstgüte aus einem Satz von verschiedenen Zieldienstgüten ausgewählt wird.

5. Verfahren nach einem der Ansprüche 1 bis 4, **dadurch gekennzeichnet, dass** mindestens ein Parameter, der zur Charakterisierung einer Dienstgüte des Kommunikationsnetzwerks verwendet wird, zur Bestimmung der tatsächlichen Dienstgüte gemessen.

6. Verfahren nach Anspruch 5, **dadurch gekennzeichnet, dass** mindestens einer der Parameter Umlaufzeit ("round trip delay"), Präzedenz ("precedence"), Sicherheit ("reliability"), Datendurchsatzrate ("data throughput rate") oder Sprachqualität ("speech quality") gemessen wird.

7. Verfahren nach einem der Ansprüche 1 bis 6, **dadurch gekennzeichnet, dass** die Dienstgüte eines zellularen Mobilfunknetzwerkes, insbesondere eines allgemeinen paketorientierten Funkdienst(GPRS)Netzwerkes, bewertet wird.

8. Verfahren nach einem der Ansprüche 1 bis 7, **dadurch gekennzeichnet, dass** bestimmt wird, ob das Netzwerk die Zieldienstgüte erreicht oder nicht, während der Nutzer die Dienste verwendet, und, wenn es die Zieldienstgüte nicht erreicht, wie oft es dies nicht tut und wie viel Prozent der Zieldienstgüte es erreicht.

9. Vorrichtung für eine Bewertung einer Dienstgüte eines Kommunikationsnetzwerkes, die Mittel zum Messen einer tatsächlichen Dienstgüte, die einem Nutzer tatsächlich zur Verfügung steht, aufweist, **dadurch gekennzeichnet, dass** das Kommunikationsnetzwerk ein solches ist, bei dem das Kommunikationsnetzwerk und der Nutzer eine Zieldienstgüte vereinbaren, die durch einen Satz von Konditionen definiert ist, und bei dem die Vorrichtung Mittel zum Berechnen eines Bewertungsergebnisses durch Vergleichen der tatsächlichen Dienstgüte mit der Zieldienstgüte aufweist.

## Revendications

1. Procédé pour une évaluation d'une qualité de service d'un réseau de communication où une qualité de service actuelle qui est actuellement à la disposition d'un utilisateur, est déterminée, **caractérisé en ce que** le réseau de communication et l'utilisateur conviennent d'une qualité de service cible et un résultat d'évaluation est calculé en comparant la qualité de service actuelle à la qualité de service cible.

2. Procédé selon la revendication 1, **caractérisé en ce que** la qualité de service d'un réseau de communication pour la transmission de données est évaluée.

3. Procédé selon la revendication 1 ou 2, **caractérisé en ce que** la qualité de service cible est définie sous un ensemble de conditions et la qualité de service actuelle est déterminée sous lesdites conditions.

4. Procédé selon l'une quelconque des revendications 1 à 3, **caractérisé en ce que** la qualité de service cible est choisie parmi un ensemble de différentes qualités de service cible.

5. Procédé selon l'une quelconque des revendications 1 à 4, **caractérisé en ce qu'**au moins un paramètre qui est utilisé pour caractériser une qualité de service du réseau de communication est mesuré pour déterminer la qualité de service actuelle.

6. Procédé selon la revendication 5, **caractérisé en ce qu'**au moins un des paramètres « temps de propagation en boucle », « précédence », « fiabilité », « débit de données » ou « qualité de parole » est mesuré.

7. Procédé selon l'une quelconque des revendications 1 à 6, **caractérisé en ce que** la qualité de service d'un réseau radio mobile cellulaire, particulièrement un réseau de service général de radiocommunication par paquets (GPRS), est évaluée.

8. Procédé selon l'une quelconque des revendications 1 à 7, **caractérisé en ce qu'**il est déterminé si le réseau atteint la qualité de service cible ou non tandis que l'utilisateur utilise le service et s'il manque à atteindre la qualité de service cible à quelle fréquence il y manque et quel pourcentage de la qualité de service cible il atteint.

9. Dispositif pour une évaluation d'une qualité de service d'un réseau de communication, le dispositif comprenant un moyen pour mesurer une qualité de service actuelle qui est actuellement à la disposition d'un utilisateur, **caractérisé en que** le réseau de communication est un réseau de communication où le réseau de communication et l'utilisateur conviennent d'une qualité de service cible qui est définie sous un ensemble de conditions et où le dispositif comprend un moyen pour calculer un résultat d'évaluation en comparant la qualité de service actuelle à la qualité de service cible.
